# EUROPEAN PATENT APPLICATION

(11) **EP 4 080 298 A1**
(43) Date of publication of application: **26.10.2022**
(21) Application number: 20901339.0
(22) Date of filing: 02.04.2020
(51) Int. Cl.: G05B 19/05, G06F 13/38

(54) **PLC ANALOG MODULE COMPRISING HART PASS-THROUGH INTERFACE**

(30) Priority: 17.12.2019 KR 20190168676
(71) Applicant: LS Electric Co., Ltd., Anyang-si, Gyeonggi-do 14119 (KR)
(72) Inventor: SIN, Yong Gak, Anyang-si Gyeonggi-do 14118 (KR)
(74) Representative: K&L Gates LLP
(86) International application number: PCT/KR2020/004486
(87) International publication number: WO 2021/125452

(57) **Abstract**

The present invention relates to a PLC analog module which supports a HART protocol, wherein the PLC analog module enables a resource management server to effectively manage a plurality of HART support apparatuses by supporting a PLC system interface and modulation and demodulation of HART signals, thereby reducing the time and cost required for maintenance and management.

## Description

### [Technical Field]

The present invention relates to a programmable logic controller (PLC) module, and more particularly to a PLC analog module which supports a HART protocol.

### [Background Art]

The Highway Addressable Remote Transducer (HART) protocol was developed by Rosemount in the mid-1980s. The HART protocol makes it possible to determine the status of a smart transmitter configured to perform intelligent functions at a remote location. For this, the smart transmitter must have a built-in communication function, and industry standards such as HART, Foundation Fieldbus, and Profibus are used for communication.

Among them, the HART protocol performs digital communication using the line of a general transmitter with a current output of 4-20mA. It is to transmit FSK (Frequency Shift Keying)-modulated data to an existing analog line. It uses HART communication to diagnose the status of the smart transmitter and transmit additionally measured or calculated values, and the like. Such intelligent apparatuses are playing an important role for managing apparatus and asset management in today's industrial space.

PLC is a control device widely used for automatic control or monitoring in industrial sites. The PLC operates by the user's input program, sequentially logically processing the program and controlling the connected external device according to the result. For example, when an input signal is input through a switch, it is processed by the operation technology inside the program, and the result is finally output to the coil.

However, even though more than 30 million transmitters worldwide support the HART protocol, it is difficult to find a PLC module that supports the HART protocol. Therefore, the HART protocol cannot be used in the PLC system unless a HART communication module compatible with the PLC device is used.

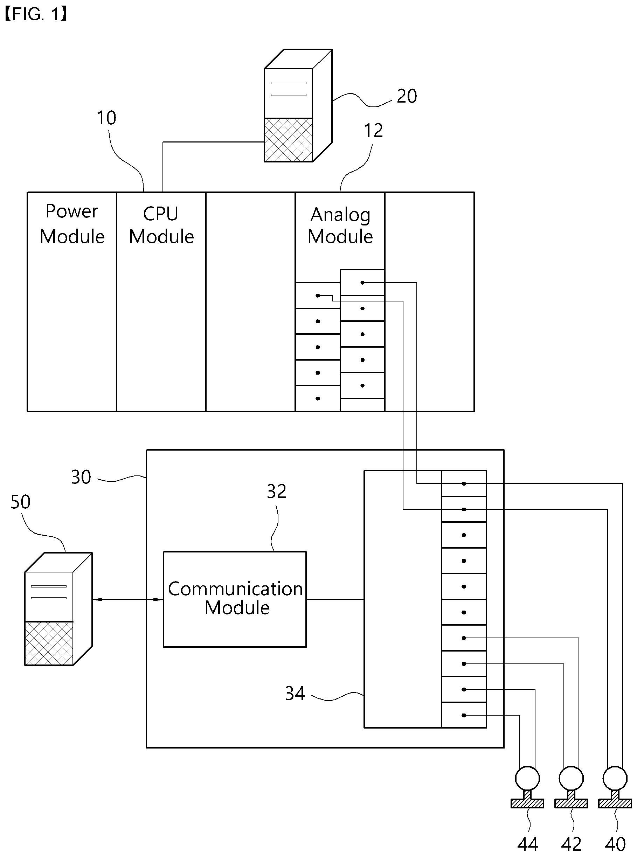

FIG. 1 a configuration example of a system for using the HART protocol in the conventional PLC system as described above.

The PLC system should include additionally include a smart transmitter interface 30 for receiving a signal from a HART transmitter 40 and an analog module 12 for converting the HART protocol signal, which is an analog signal, into a digital signal and providing it to the PLC system, in addition to a conventional basic module 10 and a control management device 20 on which control management software is executed.

In order to support the HART protocol in the PLC system, a device such as the smart transmitter interface 30 is required separately, and there are representative devices such as a HART handheld communicator and a HART multiplexer.

However, since the HART handheld communicator can only be used at the site where the smart transmitter is installed, there is a problem in that it takes time and money to move to the site, and the HART multiplexer has an disadvantage of occupying the panel space of the PLC system and consuming additional power.

The inventors of the present invention have made research efforts to solve the problems of these related art smart transmitter interfaces. After much effort to develop a method for effectively managing a plurality of smart transmitters in a PLC system without using a separate smart transmitter interface, the present invention has been completed.

### [Disclosure]

### [Technical Problem]

The present invention is to diagnose and solve a problem while optimizing a remote PLC system in real time by using smart transmitters that support HART communication without an additional device for HART communication by adding the HART protocol to the control layer of the PLC system.

Meanwhile, other aspects not specified of the present invention will be additionally contemplated within the range that can be easily inferred from the following detailed description and effects thereof.

### [Technical Solution]

A PLC analog module comprising HART pass-through interface according to the present invention includes a HART interface that converts HART signals received from HART-enabled devices into digital signals; a CPU interface for communication with a PLC CPU module; an asset management software (AWS) interface for communication with AWS of an asset management server; a memory shared with the PLC CPU module or the asset management server; and a controller including one or more processors, wherein the HART interface supports HART pass-through.

The controller may transmit a HART command received from the asset management server to the PLC CPU module through the CPU interface, receive the HART command again from the PLC CPU module, and transmit the HART command to HART support apparatuses through the HART interface.

The memory is shared by the controller and the PLC CPU module, and message exchange between the PLC analog module and the PLC CPU module is performed by the memory.

Preferably, the memory may have a structure including fields of message status, message sequence, message size, and HART message for message exchange between the PLC analog module and the PLC CPU module.

The controller directly transmits HART messages received from the HART support apparatuses to a resource management server through the AWS interface using the HART pass-through function of the HART interface.

A HART communication method performed by PLC analog module according to another embodiment of the present invention is performed by a HART interface supporting HART pass-through function and a PLC analog module including PLC communication function, the method including: receiving a HART command from an asset management server; transmitting the HART command to a PLC CPU module; receiving the HART command to which metadata is added from the PLC CPU module; and transmitting the HART command to a HART support apparatus.

The method may further include after transmitting the HART command to the HART support apparatus, receiving a HART response generated by adding metadata to the HART command by the HART support apparatus; transmitting the HART response to the PLC CPU module; and receiving the HART response from the PLC CPU module and transmitting the HART response to the asset management server.

Preferably, transmitting the HART command to the PLC CPU module is writing the HART command to a memory shared by the PLC CPU module and the PLC analog module that allows the PLC CPU module to read the HART command.

### [Advantageous Effects]

According to the present invention, since a separate device for supporting the HART protocol is not required in the PLC system, a simpler remote HART communication path can be provided. Therefore, there is an advantage of improving the productivity and availability of the entire system.

In addition, the entire system can be integrated into one, making maintenance easy and cost saving.

In the meantime, even if there is an effect not explicitly specified herein, it is added that the effects expected by the technical features of the present invention and described effects and provisional effects thereof in the following specification are regarded as described in the specification of the present invention.

### [Brief Description of Drawings]

FIG. 1 is a configuration diagram for supporting HART protocol in a related art PLC system.
FIG. 2 is a configuration diagram of a PLC system for supporting HART protocol according to a preferred embodiment of the present invention.
FIG. 3 is a configuration diagram of a PLC system for supporting HART protocol according to another embodiment of the present invention.
FIG. 4 is a more detailed configuration diagram of a HART module according to another embodiment of the present invention.
FIG. 5 is a configuration diagram of a PLC system for supporting HART protocol according to yet another embodiment of the present invention.
FIGS. 6 to 8 schematically show a flow chart of sending and receiving a HART command according to preferred embodiments of the present invention.
FIG. 9 is an example of parameter setting for performing HART communication according to a preferred embodiment of the present invention.

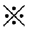 The accompanying drawings are exemplified by reference for understanding the technical idea of the present invention, and the scope of the present invention is not limited thereto.

### [Modes of the Invention]

Hereinafter, a configuration of the present invention guided by various embodiments of the present invention and effects resulting from the configuration will be described with reference to the drawings. In describing the present invention when it is determined that a detailed description of a related known function obvious to those skilled in the art may unnecessarily obscure the subject matter of the present invention, the detailed description thereof will be omitted.

Terms such as 'first' and 'second' may be used to describe various elements, but, the above elements should not be limited by the terms above. The above terms may be used only for the purpose of distinguishing one element from another. For example, without departing from the scope of the present invention, a 'first element' may be named a 'second element' and similarly, a 'second element' may also be named a 'first element.' In addition, expressions in the singular include plural expressions unless explicitly expressed otherwise in the context. Unless otherwise defined, terms used in the embodiments of the present invention may be interpreted as meanings commonly known to those of ordinary skill in the art.

Hereinafter, a configuration of the present invention guided by various embodiments of the present invention and effects resulting from the configuration will be described with reference to the drawings.

FIG. 1 schematically shows a configuration for supporting HART protocol in a related art PLC system.

The PLC system consists of a CPU module 10 and extension modules (expansion modules) that control the entire system by the CPU.

The CPU module 10 is controlled by control management software, also called PADT (Programming And Debugging Tool) of a control device 20. The control device 20 is composed of a desktop PC, a notebook PC, etc., executes a user program, and transmits the result to the CPU module 10 to control the extension modules.

HART transmitters 40, 42, and 44 transmit an analog signal to a smart transmitter interface 30. The smart transmitter interface 30 includes a terminal block 34 for connection with the HART transmitters 40, 42, and 44 and a communication module 32 for converting a HART signal into a digital signal.

The HART analog signal input to the terminal block 34 is transmitted to an analog module 12 of the PLC system or transmitted to the communication module 32 to be converted into a digital signal. A HART multiplexer (MUX) may be used as the smart transmitter interface 30, and a HART modem may be used as the communication module 32. The HART protocol has a master/slave structure, and the communication takes place in a way when the master requests communication, a measuring instrument which is a slave gives a response to it. In the master/slave structure, up to two masters can be designated, and in the data link layer, two masters can alternately communicate with the slaves. Therefore, another master apparatus may be additionally connected to the HART transmitter 40 connected to the PLC analog module 12. As an additional master apparatus, a measuring instrument for diagnosis of a HART transmitter is generally used.

The HART network may be configured in a single mode or a multi-drop mode. In single mode, an analog signal varying from 4 to 20 mA can be used, but in multi-drop mode, there is a disadvantage in that the analog output value must be fixed to a minimum value.

An asset management server 50 is used to manage field apparatuses such as HART transmitters. HART transmitters can be increased to several tens or hundreds depending on the field situation, so a device to manage them is essential. Accordingly, the asset management server 50 manages the HART transmitters using asset management software.

However, when the HART transmitters are connected using the smart transmitter interface 30 in this way, there is a problem in that the cost and operation cost for wiring increase, but the communication throughput allocated to each transmitter is rather reduced. In addition, there is also a problem in that as the number of HART transmitters increases, not only the smart transmitter interface 30 must increase, but also the management cost increases because the number of management targets increases.

Therefore, in the present invention, the problem of the related art is to be solved by adding a module for supporting the HART protocol to the PLC system itself to establish an integrated environment.

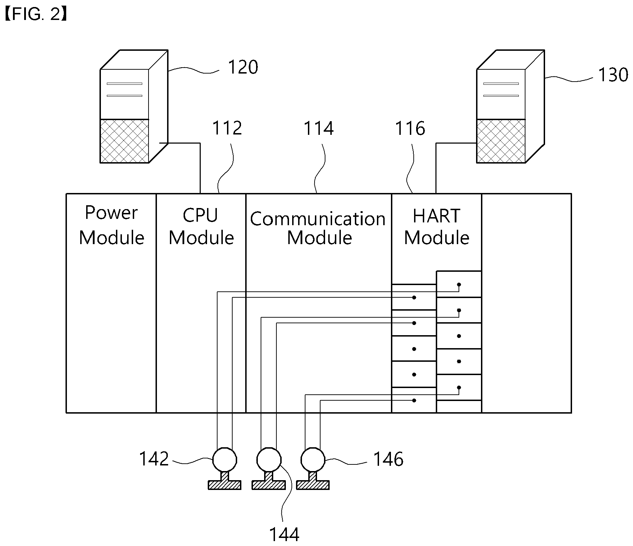

FIG. 2 is a schematic structural diagram of a PLC system including a HART module supporting the HART protocol according to a preferred embodiment of the present invention.

The PLC system includes a CPU module 112, a communication module 114, and a HART module 116.

The CPU module 112 is used to transmit a command of a control management device 120 to PLC extension modules. In the control management device 120, PADT is performed to execute a user program and transmit control commands through the CPU module 112.

The communication module 114 allows an asset management server 130 to be connected to the PLC system. To this end, the asset management software of the asset management server 130 must be able to recognize PLC devices, and a software driver called DTM (Device Type Manager) is provided from the PLC manufacturer and installed in the asset management server 130.

The HART module 116 receives HART analog signals from HART transmitters 142, 144, and 146, converts them into digital signals, and transmits them to the control management device 120 or the asset management server 130. Conversely, a HART message to be transmitted from the control management device 120 or the asset management server 130 is converted into a HART analog signal and transmitted to the HART transmitters 142, 144, and 146. For this, an analog module with HART modulation/demodulation function must be included.

The HART module 116 includes a memory that can be shared with the CPU module 112 for HART data transmission. Message transmission between the HART module 116 and the CPU module 112 is accomplished using this memory. Table 1 below shows an example of a memory structure for transmitting a message.

**[Table 1]**

| **Meaning** | Message status | Message sequence | Message size | HART message |
|---|---|---|---|---|
| **Byte size** | 2 | 2 | 2 | 64 |

In the 'message status' field, a code for checking whether the HART module 116 reads the HART message recorded by the CPU module 112 is recorded. In the 'message sequence' field, a code for checking a pair of a message requested by the CPU module 112 and a message responded by the HART module 116 is recorded. In the 'message size' field, the size of a message transmitted from the asset management server 130 or responded from the HART transmitters 142, 144, and 146 is recorded. In the 'HART message' field, the HART message actually transmitted is recorded.

In the present invention, the control management server 130 can directly transmit the HART message through PLC programming by supporting the pass-through mode in which the control management device 120 does not interpret the HART message and merely transmit it.

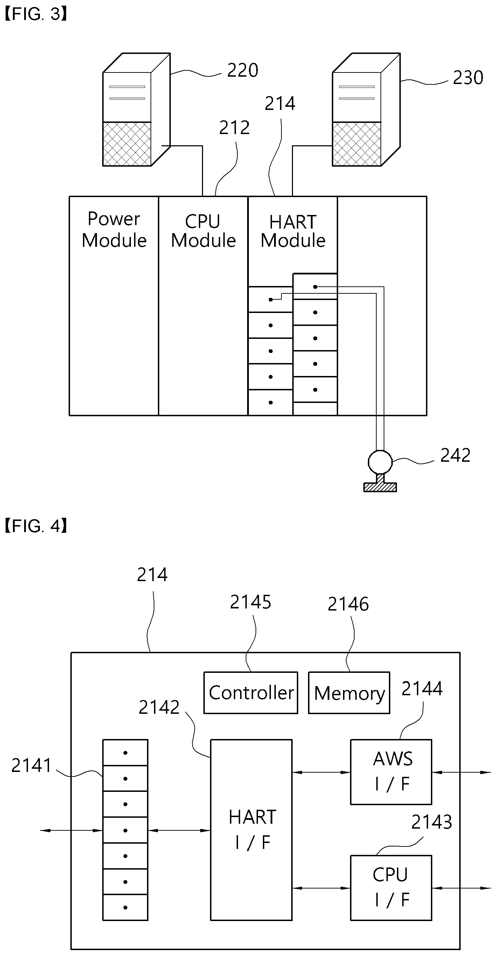

FIG. 3 shows a configuration of a PLC system according to another embodiment of the present invention.

The PLC system consists of only the CPU module 212 and the HART module 214 and is connected to the control management device 220 and the asset management server 230.

The HART module 214 performs the functions of the PLC communication module together, and thus does not require a communication module for connection with the asset management server 230.

FIG. 4 shows a more detailed structure of the HART module 214 for this purpose.

The HART module 214 includes a HART terminal 2141, a HART interface 2142, a CPU interface 2143, an asset management server (AWS) interface 2144, a controller 2145, and a memory 2146.

The HART terminal 2141 connects a HART support apparatus, such as a HART transmitter, to the HART module 214.

The HART interface 2142 performs a modulation/demodulation function of extracting a digital signal from a HART analog signal or converting a digital signal into a HART analog signal.

The CPU interface 2143 is used for communication between the HART module 214 and the CPU module 212, and the AWS interface 2144 serves to connect the asset management server 230 to the PLC system. In order to connect the asset management server 230 to the PLC system, a Device Type Manager (DTM) must be installed in the asset management software of the asset management server 230.

The memory 2146 is used to send and receive HART messages with the CPU module 212. A HART message is transmitted by writing or reading the HART message to/from the commonly accessible memory 2146, and the structure of the memory 2146 for this is as described above.

The controller 2145 includes one or more processors. It receives the HART message from the asset management server 230 or the control management device 220 and transmits it to the HART support apparatuses through the HART interface 2142, or transmits the HART message received from the HART support apparatuses to the asset management server 230 or the control management device 220.

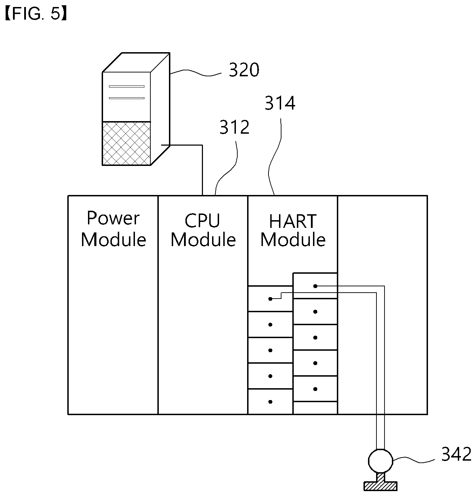

FIG. 5 is a structural diagram of a PLC system according to another embodiment of the present invention.

This is to allow the control management device 320 to directly manage HART support apparatuses without a resource management server when there are not many HART support apparatuses.

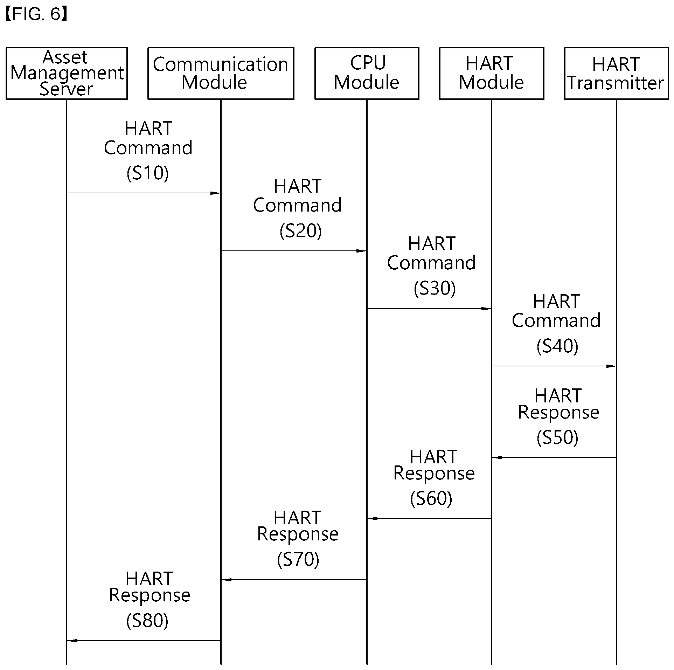

FIG. 6 is a flowchart of HART message transmission of a PLC system supporting the HART protocol according to the present invention.

The asset management server transmits a HART command to the PLC communication module at S10, and the communication module transmits it to the CPU module at S20.

The CPU module transmits metadata to the HART module after including the metadata in the HART command at S30.

The HART module modulates the HART command into an analog signal and transmits it to the HART transmitter at S40.

The HART transmitter creates a HART response by adding metadata to the received HART command, and then transmits it to the HART module at S50.

The HART module demodulates the HART analog signal received from the HART transmitter into a digital signal and transmits it to the CPU module at S60.

The CPU module transmits the HART response to the communication module without interpreting or managing it at S70, and the communication module transmits it to the asset management server at S80.

In this way, the CPU module supports the pass-through function, which transmits HART messages to the asset management server without interpreting them, thereby reducing the load on the control management device and CPU module, and thus has an advantage that the asset management server can manage HART support apparatuses in an integrated manner.

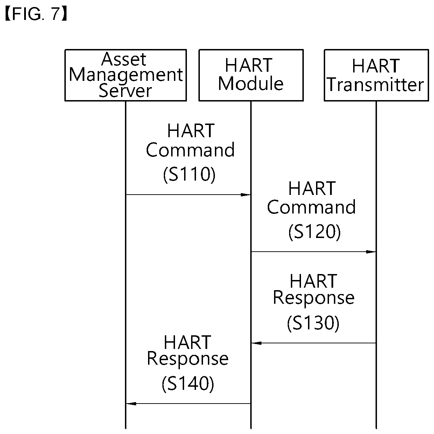

FIG. 7 is a flowchart of HART message transmission according to another embodiment of the present invention.

In addition to the modulation/demodulation function of the HART analog signal, the HART module may also include a function of a communication module for communication between the asset management server and the CPU module. Then, communication between the asset management server and the HART support apparatuses can be simplified as shown in FIG. 7.

The asset management server can directly transmit the HART command to the HART module through the PLC command without going through the communication module or CPU module at S110.

The HART module modulates the HART command into an analog signal and transmits it to the HART transmitter at S120.

The HART transmitter generates a HART response by adding metadata to the HART command and transmits it to the HART module at S130, and then the HART module demodulates the analog signal into a digital signal and transmits it to the asset management server at S140

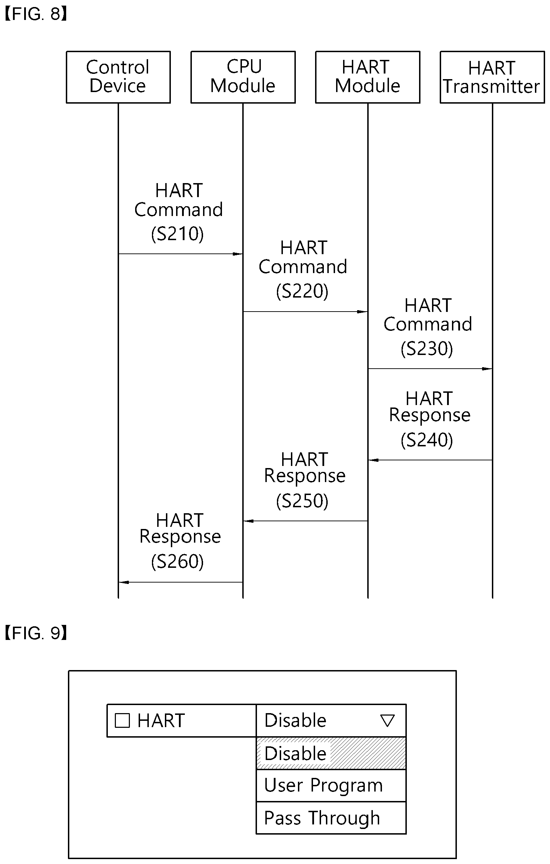

FIG. 8 is a flowchart of transmitting a HART message in a user mode.

A small-scale system as shown in FIG. 5 can directly manage HART support apparatuses by using a control management device included in the PLC system without using the pass-through mode.

The control device transmits a HART command to the CPU module at S210, and the CPU module adds metadata to the HART command and transmits it to the HART module at S220.

The HART module modulates the HART command in analog form and transmits it to the HART transmitter at S230.

The HART transmitter generates a HART response by adding metadata to the HART command, and then transmits it to the HART module at S240.

The HART module converts the HART analog signal into a digital signal and transmits it to the CPU module at S250, and the CPU module transmits it to the control device at S260.

As such, a user interface is needed to distinguish the pass-through mode from the user program mode.

FIG. 9 shows an example of such a user setting mode.

It shows that the HART module can be set to Disable, user program mode and pass-through mode.

According to various embodiments of the present invention as described above, there is an advantage in that the user can freely expand the HART support apparatuses, and can more conveniently integrate and manage the HART support apparatuses.

The scope of protection of the present invention is not limited to the description and expression of the embodiments explicitly described above. In addition, it is added once again that the scope of protection of the present invention may not be limited due to obvious changes or substitutions in the art of the present invention.

## Claims

1. A PLC analog module comprising HART pass-through interface, comprising:
a HART interface that converts HART signals received from HART-enabled devices into digital signals;
a CPU interface for communication with a PLC CPU module;
an asset management software (AWS) interface for communication with AWS of an asset management server;
a memory shared with the PLC CPU module or the asset management server; and
a controller comprising one or more processors,
wherein the HART interface supports HART pass-through.

2. The PLC analog module comprising HART pass-through interface of claim 1, wherein the controller transmits a HART command received from the asset management server to the PLC CPU module through the CPU interface, receives the HART command again from the PLC CPU module, and transmits the HART command to HART support apparatuses through the HART interface.

3. The PLC analog module comprising HART pass-through interface of claim 1, wherein the memory is shared by the controller and the PLC CPU module, and message exchange between the PLC analog module and the PLC CPU module is performed by the memory.

4. The PLC analog module comprising HART pass-through interface of claim 3, wherein the memory has a structure comprising fields of message status, message sequence, message size, and HART message for message exchange between the PLC analog module and the PLC CPU module.

5. The PLC analog module comprising HART pass-through interface of claim 1, wherein the controller directly transmits HART messages received from the HART support apparatuses to the resource management server through the AWS interface using HART pass-through function of the HART interface.

6. A HART communication method performed by a HART interface supporting HART pass-through function and a PLC analog module comprising PLC communication function, the method comprising:
receiving a HART command from an asset management server;
transmitting the HART command to a PLC CPU module;
receiving the HART command to which metadata is added from the PLC CPU module; and
transmitting the HART command to a HART support apparatus.

7. The HART communication method performed by PLC analog module of claim 6, further comprising:
after transmitting the HART command to the HART support apparatus,
receiving a HART response generated by adding metadata to the HART command by the HART support apparatus;
transmitting the HART response to the PLC CPU module; and
receiving the HART response from the PLC CPU module and transmitting the HART response to the asset management server.

8. The HART communication method performed by PLC analog module of claim 6, wherein transmitting the HART command to the PLC CPU module is writing the HART command to a memory shared by the PLC CPU module and the PLC analog module that allows the PLC CPU module to read the HART command.
